# EUROPÄISCHE PATENTANMELDUNG

(11) **EP 3 955 185 A1**
(43) Veröffentlichungstag der Anmeldung: **16.02.2022**
(21) Anmeldenummer: 20190567.6
(22) Anmeldetag: 11.08.2020
(51) Int. Cl.: G06Q 10/06

(54) **RISIKOBEWERTUNG EINES PRODUKTIONSABLAUFS FÜR DIE FLEXIBLE PRODUKTFERTIGUNG**

(71) Anmelder: Siemens Aktiengesellschaft, 80333 München (DE)
(72) Erfinder: Klein, Wolfram, 85579 Neubiberg (DE); Rothbauer, Stefan, 86156 Augsburg (DE); Wehrstedt, Jan Christoph, 81829 München (DE)

(57) **Zusammenfassung**

Die Erfindung betrifft ein Verfahren zur Produktionsplanung, bei dem eine Gesamtbewertungsgröße (RIS-ges) für einen Produktionsablauf ermittelt wird. Der Produktionsablauf besteht aus einer Mehrzahl von Produktionsschritten. Die Gesamtbewertungsgröße (RIS-ges) wird aus Einzelbewertungsgrößen (RIS-single) für jeden Produktionsschritt des Produktionsablaufs ermittelt. Zuvor werden jeder Einzelbewertungsgröße (RIS-single) einer oder mehrere Werte zugeordnet, und hierbei wird zumindest einem Teil der Einzelbewertungsgrößen (RIS-single) ein Wertebereich zugeordnet, innerhalb welchem die jeweilige Einzelbewertungsgröße (RIS-single) liegt.

## Beschreibung

Die Erfindung betrifft ein Verfahren zur Produktionsplanung, bei dem eine Gesamtbewertungsgröße für einen Produktionsablauf ermittelt wird.

In großen komplexen Produktionsanlagen ist oft unklar, welche Maschinen bzw. welche Produktionsschritte zu der finalen Produktqualität in welchem Ausmaß beitragen, welche Maschine oder welcher Produktionsschritt am kritischsten ist, und welche Tests am besten durchgeführt werden sollten, um einerseits eine stabile Qualität bei andererseits geringem Testaufwand zu erhalten. Wenn dieses Wissen vorhanden wäre, dann könnte der gesamte Produktionsablauf und somit die Entscheidung, welche Maschinen und Produktionsschritte für die Produktfertigung sinnvollerweise anzuwenden sind, besser geplant werden. Auch könnte die Produktionszeit für eine zu erzielende Qualität, die Menge der benötigten Eingangsmaterialien, der Energieverbrauch der Produktion, und sogar Maßnahmen zur Modernisierung oder Wartung besser prognostiziert und geplant werden.

Der Erfindung liegt die Aufgabe zugrunde, ein verbessertes Verfahren zur Produktionsplanung aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen und Weiterbildungen sind Gegenstand von Unteransprüchen.

Das erfindungsgemäße Verfahren dient der Produktionsplanung. Es wird eine Gesamtbewertungsgröße für einen Produktionsablauf ermittelt. Dieser Produktionsablauf umfasst eine Mehrzahl von Produktionsschritten. Die Gesamtbewertungsgröße wird aus Einzelbewertungsgrößen für jeden Produktionsschritt des Produktionsablaufs ermittelt. Jeder Einzelbewertungsgröße werden einer oder mehrere Werte zugeordnet, und hierbei wird zumindest einem Teil der Einzelbewertungsgrößen ein Wertebereich zugeordnet, innerhalb welchem die jeweilige Einzelbewertungsgröße liegt.

Es wird ein bestimmter Produktionsablauf betrachtet, der eine Reihe aufeinanderfolgender Produktionsschritte aufweist. Die Gesamtbewertungsgröße gibt die Güte des Produktionsablaufs an; sie kann die finale Qualität des Produktes, oder auch Produktionszeit oder -kosten, abbilden. Entsprechendes gilt für die Einzelbewertungsgrößen in Bezug auf die einzelnen Produktionsschritte. Aus den Einzelbewertungsgrößen der Produktionsschritte wird die Gesamtbewertungsgröße des Produktionsablaufs bestimmt.

Um die Gesamtbewertungsgröße aus den Einzelbewertungsgrößen ermitteln zu können, müssen vorher Werte für die Einzelbewertungsgrößen vorliegen. Hierzu ist vorgesehen, dass jeder Einzelbewertungsgröße einer oder mehrere Werte zugeordnet werden, welche dann bei der Ermittlung der Gesamtbewertungsgröße eingesetzt werden. Für eine oder mehrere der Produktionsschritte wird nicht ein einzelner Wert, sondern ein Wertebereich verwendet. Diese Zuordnung bedeutet, dass der für die Ermittlung der Gesamtbewertungsgröße zu verwendende Wert für die jeweilige Einzelbewertungsgröße innerhalb des Wertebereichs liegen muss. Die Verwendung eines oder mehrerer Wertebereiche ermöglicht es z.B., mehrere Gesamtbewertungsgrößen zu ermitteln, indem verschiedene Werte aus den Wertebereichen eingesetzt werden. Außerdem kann durch die Auswahl bestimmter Werte aus den Wertebereichen bereits eine Aussage über die Gesamtbewertungsgröße getroffen werden: z.B. würde eine Auswahl schlechter Werte für die Einzelbewertungsgrößen eine Aussage über eine untere oder Mindestqualität des Produktionsablaufs ermöglichen.

Besonders vorteilhaft ist es, wenn zumindest einem Teil der Einzelbewertungsgrößen einzelne Werte zugeordnet werden, welche auf Messungen bezüglich des jeweiligen Produktionsschritts, und/oder auf Erfahrungswissen bezüglich des jeweiligen Produktionsschrittes basieren. In diesem Fall wird somit für einen oder mehrere Produktionsschritte ein Wertebereich verwendet, und für einen oder mehrere Produktionsschritte Einzelwerte. Eine Messung ermöglicht hierbei eine besonders zuverlässige Festlegung eines Einzelwertes. Das Erfahrungswissen hingegen kann unter Umständen auch sehr zuverlässig sein, kann aber auch einer groben Schätzung entspringen.

Ferner ist es vorteilhaft, wenn zumindest einem Teil der Einzelbewertungsgrößen einzelne Werte zugeordnet werden, welche auf einer Simulationen des jeweiligen Produktionsschrittes basieren. Hierbei kann versucht werden, die realen Bedingungen, unter welchen der Produktionsschritt abläuft, möglichst exakt einzubeziehen. Dies ist möglich durch das Simulieren des physikalischen Verhaltens der den Prozessschritt durchführenden Maschine, und/oder durch Simulieren eines Alterungsprozess der den Prozessschritt durchführenden Maschine, und/oder durch Simulieren von Wartungen und/oder Reparaturen an der den Prozessschritt durchführenden Maschine, und/oder durch Simulieren von Ausfällen an der den Prozessschritt durchführenden Maschine. Hierdurch können nicht nur die aktuellen Eigenschaften der Maschine betrachtet werden, sondern auch positive und negative Veränderungen.

In Weiterbildung der Erfindung werden zusätzlich zu den Wertebereichen den Einzelbewertungsgrößen Wahrscheinlichkeitsverteilungen zugeordnet bezüglich der Verteilung der Einzelbewertungsgrößen innerhalb der Wertebereiche. Wenn sowohl ein Wertebereich als auch eine Wahrscheinlichkeitsverteilung einer Einzelbewertungsgröße zugeordnet werden, kann diese Verteilung bei der Auswahl von Werten aus dem Bereich zum Zwecke der Ermittlung der Gesamtbewertungsgröße eingesetzt werden. Insbesondere ist es sinnvoll, den wahrscheinlichsten Wert aus dem Wertebereich bei der Ermittlung der Gesamtbewertungsgröße einzusetzen.

In Ausgestaltung der Erfindung beinhaltet das Ergebnis der Ermittlung eine Mehrzahl von Gesamtbewertungsgrößen. Dies kann dadurch erreicht werden, dass verschiedene Werte aus dem oder den Wertebereichen der Einzelbewertungsgrößen eingesetzt werden. Aus der Mehrzahl der Ergebnisse kann ein einzelner Wert berechnet werden, z.B. durch Mittelwertbildung oder durch Auswahl des besten/schlechtesten Wertes. Auch die Verteilung der Werte der Gesamtbewertungsgröße kann ausgewertet werden, um z.B. Aussagen über die Zuverlässigkeit der Ergebnisse treffen zu können.

Vorzugsweise setzt sich die Gesamtbewertungsgröße aus der Summe der Einzelbewertungsgrößen der Produktionsschritte des Produktionsablaufs zusammen. Alternativ können auch komplexere Berechnungsvorschriften zum Einsatz kommen.

Unter Verwendung der ermittelten Gesamtbewertungsgröße kann dann eine Produktionsplanung erfolgen und Produkte gemäß dieser Produktionsplanung gefertigt werden. Die Gesamtbewertungsgröße kann z.B. dahingehend in die Produktionsplanung eingehen, dass bei einer ausreichend guten Gesamtbewertungsgröße der betrachtete Produktionsablauf ohne Modifikation durchgeführt wird. Bei einer Gesamtbewertungsgröße, welche eine ungenügende Qualität anzeigt, sollte eine Änderung an einem oder mehreren der Produktionsschritte vorgenommen werden. Dies kann z.B. erfolgen, indem ein Produktionsschritt auf einer anderen Maschine durchgeführt wird. Diesem veränderten Produktionsschritt kann dann ein neuer Wert für die Einzelbewertungsgröße zugeordnet werden, woraufhin erneut die Ermittlung der Gesamtbewertungsgröße durchgeführt wird. Im Anschluss kann geprüft werden, ob diese neu ermittelte Gesamtbewertungsgröße für eine ausreichende Qualität des Produktionsablaufs steht.

Im Folgenden wird die Erfindung anhand eines Ausführungsbeispiels näher erläutert. Dabei zeigen:
- Figur 1:: eine Produktionsanlage,
- Figur 2:: einen Verfahrensablauf.

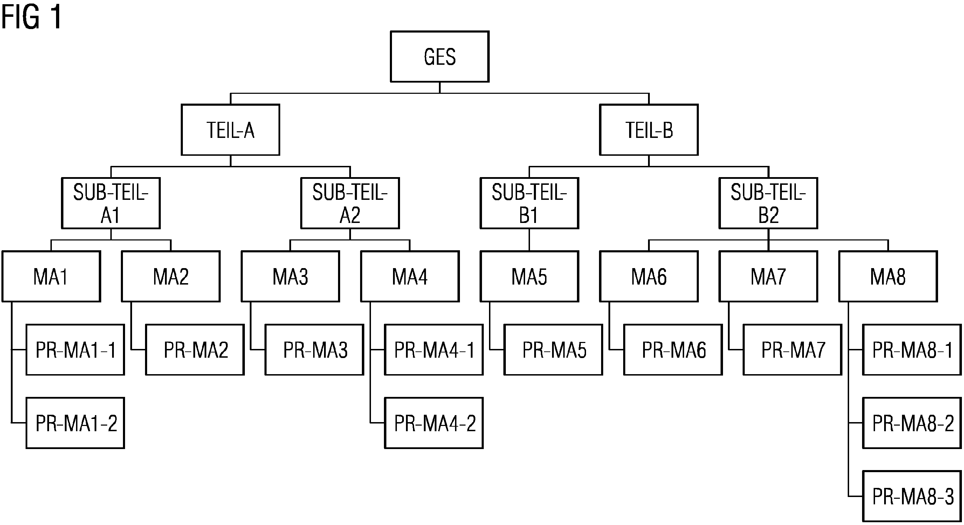

Mittels der in Figur 1 gezeigten komplexen Produktionsanlage GES können verschiedene Produkte hergestellt werden. Die gesamte Produktionsanlage GES ist in Teilanlagen hierarchisch über zwei Ebenen organisiert, sie umfasst hierzu zwei Teilanlagen TEIL-A und TEIL-B, wobei diese wiederum die Sub-Teilanlagen SUB-TEIL-A1 und SUB-TEIL-A2 bzw. SUB-TEIL-B1 und SUB-TEIL-B2 umfassen. Ferner gehören zu jeder Sub-Teilanlage eine oder mehrere Maschinen, und zwar zur Sub-Teilanlage SUB-TEIL-Al die Maschinen MA1 und MA2, zur Sub-Teilanlage SUB-TEIL-A2 die Maschinen MA3 und MA4, zur Sub-Teilanlage SUB-TEIL-B1 die Maschine MA5, zur Sub-Teilanlage SUB-TEIL-B2 die Maschinen MA6, MA7 und MA8. Auf jeder Maschine kann einer oder mehrere verschiedene Produktionsschritte ablaufen, und zwar auf der Maschine MA1 die Produktionsschritte PR-MA1-1 und PR-MA1-2, auf der Maschine MA2 der Produktionsschritt PR-MA2, auf der Maschine MA3 der Produktionsschritt PR-MA3, auf der Maschine MA4 die Produktionsschritte PR-MA4-1 und PR-MA4-2, auf der Maschine MA5 der Produktionsschritt PR-MA5, auf der Maschine MA6 der Produktionsschritt PR-MA6, auf der Maschine MA7 der Produktionsschritt PR-MA7, und auf der Maschine MA8 die Produktionsschritte PR-MA8-1, PR-MA8-2 und PR-MA8-3.

Selbstverständlich sind die in Figur 1 gezeigten Anzahlen an Teilanlagen, an Maschinen und Produktionsschritten beispielhaft; üblicherweise verfügen komplexen Produktionsanlagen über größere Anzahlen.

Zur Produktion eines bestimmten Produktes wird eine Teilmenge oder alle der Produktionsschritte PR-MA1-1, PR-MA1-2, PR-MA2, PR-MA3, PR-MA4-1, PR-MA4-2, PR-MA5, PR-MA6, PR-MA7, PR-MA8-1, PR-MA8-2, PR-MA8-3 in einer bestimmten Reihenfolge durchlaufen. Diese Reihenfolge oder Kontrollstrategie wird im Folgenden als Produktionsablauf bezeichnet. Hierbei ist es möglich, dass einer oder mehrere Produktionsschritte auf verschiedenen Maschinen durchgeführt, diese Maschinen also alternativ eingesetzt werden können. Es handelt sich bei der Produktionsanlage also nicht um ein einfaches Förderband, bei dem alle Produkte die gleichen Produktionsschritte durchlaufen. Vielmehr sind autonome Transporteinheiten vorhanden, welche das in der Produktion befindliche Produkt von Maschine zu Maschine transportieren, so dass pro Produkt ein unterschiedlicher Produktionsablauf stattfinden kann.

Das im folgende beschriebene Vorgehen ist relevant für Produkte, die weitgehend automatisiert in Fertigungsstraßen produziert werden und Qualitätsziele haben. Dies trifft auf praktisch alle heutzutage in Fabriken gefertigten Produkte zu. Ein einfaches Beispiel wäre ein Schrank oder seine Bestandteile, wobei Wände und Regale für den Zusammenbau vorbereitet werden, indem diese mit mehreren Löchern in einer bestimmten Anordnung versehen werden. Hierfür kann ein Maschinenplatz mit einer Bohrmaschine, aber auch zwei parallele Plätze vorgesehen sein, wobei der zweite Platz relativ zum ersten z.B. nicht nur Löcher bohren sondern auch noch stanzen kann, also gegenüber dem ersten eine erweiterte Funktionalität aufweist. Der Produktionsablauf kann daher vorsehen, dass die Löcher entweder von der ersten Maschine, also am ersten Maschinenplatz, oder von der zweiten Maschine gebohrt werden.

Für die Planung eines Produktionsablaufs ist es wichtig zu wissen, welche Auswirkung ein bestimmter Produktionsschritt auf einer bestimmten Maschine bezüglich der finalen Produktqualität hat. Das so genannte Deployment eines Arbeitsschrittes auf einer Maschine, ist maßgeblich für die in einem konkreten Ablauf zu erwartende Gesamtqualität des Produktionsablaufs. Dieses Deployment wird in der Regel in Arbeitsplänen (production schedules) vorgenommen. Wenn das Wissen um die Qualität einzelner Produktionsschritte vorhanden wäre, könnte die Auswahl der Maschinen und Produktionsschritte so bestimmt werden, dass eine bestimmte Mindestqualität für das Produkt erreicht wird. Auch die hierfür anfallenden Kosten und die Dauer der jeweiligen Produktion könnten dann genauer prognostiziert werden.

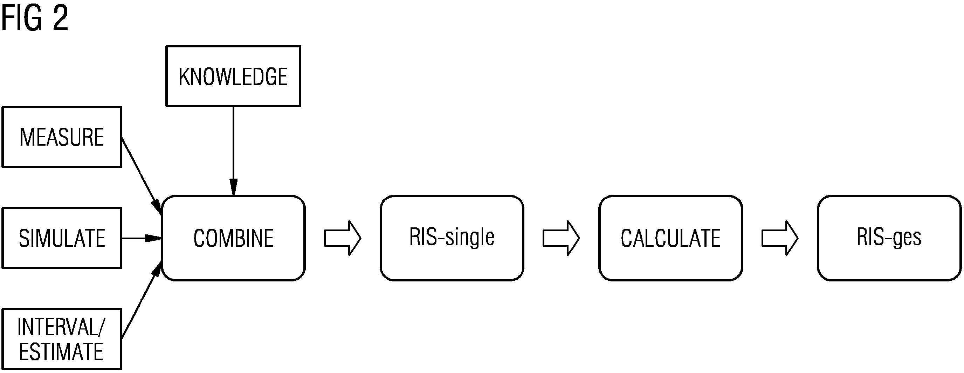

Das im Folgenden anhand von Figur 2 beschriebene Verfahren dient der besseren Qualitätsplanung eines Produktionsablaufs. Dies ist relevant insbesondere bezogen auf eine "Industrie 4.0 Fertigung" mit Hinsicht auf "Lot Size 1" bzw. Losgröße 1 Produktion, also der Sonderanfertigung von nur einzelnen Exemplaren eines Produktes, oder auch von sehr spezifischen Produkten. Üblicherweise sind nämlich bei einer "Lot Size 1" Produktion nicht genügend reale Daten vorhanden für die Beurteilung des Einflusses einzelner Produktionsschritte / Maschinen auf die finale Produktqualität.

Das Ziel der im folgenden beschriebenen Vorgehensweise ist es, die Gesamt-Risikobewertung RIS-ges eines bestimmten Produktionsablaufs zu ermitteln. Diese Gesamt-Risikobewertung kann z.B. in zu erwartendem Schaden in Euro angegeben werden, oder auch als anderer numerischer Wert. Er kann auch als Gesamtfehler bezeichnet werden und berechnet sich als Summe der Einzel-Risikobewertungen RIS-single aller bei dem betrachteten Produktionsablauf durchlaufenen Produktionsschritte. Die Einzel-Risikobewertung RIS-single eines einzelnen Produktionsschrittes auf einer bestimmten Maschine ist das Produkt der Eintrittswahrscheinlichkeit eines Schadens oder Fehlers bei diesem Produktionsschritt auf dieser Maschine mit dem jeweils im Fehlerfall eintretenden Schadensausmaß. Diese Eintrittswahrscheinlichkeit wird im Folgenden mit E(i), und das Schadensausmaß mit S(i) bezeichnet, wobei die Kombination von Produktionsschritt und Maschine mit i indiziert ist.

Zunächst werden die Einzel-Risikobewertungen RIS-single bestimmt. Hierzu werden im Schritt COMBINE mehrere Eingangsgrößen erfasst und kombiniert. Hierbei gilt, dass jeder Produktionsschritt, dessen Einzel-Risikobewertungen RIS-single zu bestimmen ist, mit Informationen von einer oder mehrerer der Eingangsgrößen versehen werden muss.

Gemäß der Eingangsgröße KNOWLEDGE werden die Erfahrungswerte des Operators, also des für den Betrieb der jeweiligen Maschine zuständigen, genutzt. Dieser kennt seine Maschine und den Produktionsschritt zumindest in manchen Fällen gut und kann dem jeweiligen Produktionsschritt zwei konkrete Realwerte für E(i) und S(i) zuordnen.

Gemäß der Eingangsgröße MEASURE werden für wichtige Prozessschritte, für welche kein zuverlässiges Wissen des Operators vorhanden ist, Messungen durchgeführt. Auf diese Weise können konkrete Werte für E(i) und S(i) erhalten werden.

Gemäß der Eingangsgröße SIMULATE werden Simulationen des jeweiligen Prozessschrittes durchgeführt, um Werte für E(i) und S(i) zu bestimmen. Dies kann erfolgen, indem für die jeweilige Maschine
- das präzise physikalische Verhalten simuliert wird, vorzugsweise inklusive der durch die Maschine verursachte Toleranzabweichungen,
- vorzugsweise dieses physikalische Verhalten mit einem Alterungsprozess belegt wird,
- vorzugsweise dieses physikalische Verhalten um Wartungsvorgänge wie z.B. dem zyklischen Ersetzen von Verschleißteilen, Ersetzen von Betriebsmitteln, ..., ergänzt wird,
- vorzugsweise das Ausfallverhalten einzelner Maschinenteile einbezogen wird, was einer Produktion unter Einfluss von Störungen an der Maschine entspricht.
Die Berücksichtigung dieser verschiedenen Einflussfaktoren bei der Simulation führt zu realistischeren Werten im Vergleich zu den optimal für den jeweiligen Produktionsschritt erreichbaren.

Gemäß der Eingangsgröße INTERVAL/ESTIMATE werden der Eintrittswahrscheinlichkeit E(i) und dem Schadensausmaß S(i) jeweils ein Intervall [E(i)ᵤ, ..., E(i)ₒ] bzw [S(i)ᵤ, ..., S(i)ₒ] zugeordnet.

Hierbei ist es hilfreich, zuvor Risikoklassen zu definieren, in welche die Größen E(i) und S(i) des jeweiligen Produktionsschrittes eingeteilt werden können. Für das Schadensausmaß können z.B. die fünf Klassen "sehr kritisch", "kritisch", "mäßig kritisch", "wenig kritisch", "nicht kritisch" verwendet werden, und für die Eintrittswahrscheinlichkeit z.B. die fünf Klassen "Fehler tritt sehr häufig auf", "Fehler tritt häufig auf", "Fehler tritt manchmal auf", "Fehler tritt selten auf", "Fehler tritt sehr selten auf". Zu jeder der Klassen gehört ein Wertebereich, so dass durch Einteilung eines Produktionsschrittes in diese Klassen gleichzeitig ein Intervall für E(i) und S(i) zugeordnet ist.

Die beschriebene Klasseneinteilung basiert vorzugsweise auf dem Wissen des Operators bezüglich der Qualität der jeweiligen Produktionsschrittes. Die Erfahrung des Operators kann also sowohl bei Einzelwerten als auch bei Intervallen genutzt werden.

Für jeden Produktionsschritt, d.h. für jedes Wertepaar E(i), S(i), können einer, mehrere oder alle der beschriebenen Eingangsgrößen verwendet werden. Im Schritt COMBINE wird dann entschieden, welche Einzel-Risikobewertungen RIS-single für den jeweiligen Produktionsschritt der darauffolgenden Berechnung zugrunde gelegt wird. Bei dieser Einzel-Risikobewertungen RIS-single kann es sich um diskrete Werte E(i), S(i) handeln. Wenn die Eingangsgröße INTERVAL/ESTIMATE zum Einsatz kommt, kann es sich auch um Wertebereiche handeln.

Neben diesen beschriebenen Eingangsgrößen können situationsabhängig weitere in Betracht kommen, wie z.B. Rechercheergebnisse aus Datenbanken.

Für die Kombination der Eingangsgrößen im Schritt COMBINE eignet sich besonders eine einfache oder gewichtete Mittelwertbildung. Ein Beispiel wäre: die Eingangsgröße KNOWLEDGE trägt 70% zur Risikobewertungen RIS-single bei, die Eingangsgröße SIMULATE 30%. Für die Kombination der Eingangsgröße INTERVAL/ESTIMATE mit einer der anderen Eingangsgrößen eignet sich die Verschiebung des Zahlenbereichs der Eingangsgröße INTERVAL/ESTIMATE in Richtung des Wertes der anderen Eingangsgröße.

Im Schritt CALCULATE findet die Berechnung der Gesamt-Risikobewertung RIS-ges des betrachteten Produktionsablaufs basierend auf den ermittelten Einzel-Risikobewertungen RIS-single statt. Dies erfolgt durch eine Summenbildung der zuvor bestimmten Einzel-Risikobewertungen RIS-single des Produktionsablaufs: RIS-ges = ∑E(i)^{∗}S(i) = E(1) ^{∗} S(1) + E(2) ^{∗} S(2) + E(3) ^{∗} S(3) +...

Wenn die Eingangsgröße INTERVAL/ETSIMATE nicht verwendet wurde, ergibt sich hiermit unmittelbar das gesuchte Ergebnis RIS-ges. Es liegt somit ein einziger Ergebniswert für die Gesamt-Risikobewertung RIS-ges des betrachteten Produktionsablaufs vor. Wenn hingegen die Eingangsgröße INTERVAL/ESTIMATE berücksichtigt wurde und somit für zumindest einen Produktionsschritt Wertebereiche für E(i), S(i) vorliegen, wird folgendermaßen vorgegangen:

Es werden bestimmte Verteilungen innerhalb der Wertebereiche definiert, wie z.B.
a) Mittelwert: für E(i), S(i) wird der Mittelwert des jeweiligen Intervalls verwendet;
b) "normale" Wahrscheinlichkeitsverteilung: diese gibt an, mit welcher Wahrscheinlichkeit E(i) bzw. S(i) einen bestimmten Wert aus dem jeweiligen Intervall einnehmen soll. Ein geeignetes Beispiel ist eine Gaußverteilung einer bestimmten Breite; je sicherer das Wissen über die Maschine und den Produktionsschritt ist, desto kleiner sollte die mittlere Breite der Gaußverteilung sein. Alternativ kann auch eine Gleichverteilung verwendet werden, d.h. jeder Wert tritt mit gleicher Wahrscheinlichkeit auf.
c) "extreme" Wahrscheinlichkeitsverteilung: auch diese gibt an, mit welcher Wahrscheinlichkeit E(i) bzw. S(i) einen bestimmten Wert aus dem jeweiligen Intervall einnehmen soll. Im Gegensatz zur oben erläuterten "normalen" Wahrscheinlichkeitsverteilung sollen jedoch mit hoher Wahrscheinlichkeit die schlechtesten (worst case Szenario) und/oder besten (best case Szenario) Werte eingenommen werden.

Im Schritt CALCULATE werden in den obigen Fällen b) und c) mehrere Werte für die Gesamt-Risikobewertung RIS-ges des betrachteten Produktionsablaufs berechnet, es ergibt sich also eine Verteilung des zu erwartenden Qualitätsrisikos. Hierzu werden für diejenigen E(i), S(i), denen ein Wertebereich zugeordnet ist, bei jeder Berechnung zufällig Werte entsprechend der jeweiligen Wahrscheinlichkeitsverteilung verwendet. Die Berechnung des Gesamt-Risikobewertung RIS-ges erfolgt also vielmals, wobei für diejenigen Produktionsschritte, bei welchen ein Wertebereich als Einzel-Risikobewertung RIS-single vorliegt, verschiedene Werte aus diesen Bereichen zugrunde gelegt werden.

Man erhält als Ergebnis dementsprechend eine Mehrzahl von Werten für die Gesamt-Risikobewertung RIS-ges. Für die weitere Verwendung der ermittelten Gesamt-Risikobewertung RIS-ges können die Ergebnisse auf einen Einzelwert verdichtet werden, z.B. durch Bildung des Mittelwertes oder Medians. Eine solche Verdichtung kann auch dadurch realisiert werden, dass für die Eingangsgröße KNOWLEDGE nicht nur die Erfahrungswerte des Operators hinsichtlich der E(i), S(i) abgefragt werden, sondern auch ein von ihm erwarteter Wert für die Gesamt-Risikobewertung RIS-ges. Mit letzterem können dann die berechneten Ergebnisse verglichen werden, und derjenige Ergebniswert verwendet werden, welche dem vom Operator prognostizierten Wert am nächsten kommt. Alternativ zur Verdichtung auf einen Einzelwert ist es möglich, die gesamte Verteilung der Werte für die Gesamt-Risikobewertung RIS-ges weiter zu verwenden.

Nach Vorliegen des Ergebniswertes für die Gesamt-Risikobewertung RIS-ges des betrachteten Produktionsablaufs kann dieser zur Produktionsplanung herangezogen werden:
- Ist die Gesamt-Risikobewertung RIS-ges ausreichend gut, kann die Produktion gemäß dem betrachteten Produktionsablauf erfolgen.
- Entspricht die Gesamt-Risikobewertung RIS-ges nicht den Anforderungen, sollten Modifikationen am betrachteten Produktionsablauf vorgenommen werden. Hierbei kann insbesondere bezüglich der besonders kritischen Prozessschritte, d.h. bei denjenigen, deren Einzel-Risikobewertungen RIS-single besonders schlecht sind, überlegt werden, ob diese umgangen werden können. Dies wäre z.B. möglich durch Austausch der betroffenen Maschine, d.h. durch Durchführung des Prozessschrittes auf einer anderen Maschine, entweder auf einer bereits in der Produktionsanlage existierenden oder einer neu zu beschaffenden. Mit entsprechenden neuen Werten für die Einzel-Risikobewertung RIS-single wird dann der Schritt CALCULATE erneut durchgeführt.
- Die zu erwartende Produktionszeit, einschließlich des für die Überprüfung und eventuellen Korrektur/Nachbearbeitung des Produktes benötigten Zeitaufwandes, sowie der für den Produktionsablauf erforderliche Materialbedarf und der Energieverbrauch der Produktion kann bestimmt werden.

Zur Auswertung einer Verteilung der Werte für die Gesamt-Risikobewertung RIS-ges kann z.B. analysiert werden, was im schlechtesten und im besten Fall zu erwarten ist, und wie breit die Werteverteilung ist.

Es kann sinnvoll sein, das Ergebnis der Gesamt-Risikobewertung RIS-ges des betrachteten Produktionsablaufs durch eine Simulation zu überprüfen. Hierbei kann z.B. ein Monte-Carlo Ansatz zum Einsatz kommen. Man hat in diesem Fall viele Simulationsergebnisse vorliegen und kann bestimmen, ob sich aus diesen als Erwartungswert die ermittelte Gesamt-Risikobewertung RIS-ges ergibt.

Von Vorteil bei der beschriebenen Vorgehensweise ist, dass eine gute Qualität eines zu produzierenden Produktes erreicht werden kann, ohne dass viele Tests an Maschinen nötig sind. Dies wird erreicht, indem verschiedene Kenntnisquellen bezüglich der Einzel-Risikobewertung einzelner Produktionsschritte, wie u.a. teilweise vorhandene Erfahrungen bzw. vorhandenes Wissen über die Qualität einzelner Produktionsschritte, vereinzelte gezielt durchgeführte Messungen und Simulationen, sowie eine Klasseneinteilung genutzt und miteinander kombiniert werden.

Das Verfahren kann auf einem Computer durchgeführt werden. Das hierauf laufende Programm fragt zunächst für jeden Produktionsschritt Informationen zu den verschiedenen Eingangsgrößen ab. Bei der Eingangsgröße INTERVAL/ESTIMATE wird ferner abgefragt, welche Wahrscheinlichkeitsverteilungen zum Einsatz kommen sollen, und ob das Ergebnis als Einzelwert oder als Intervall auszugeben ist. Schließlich wird dem Nutzer die berechnete Gesamt-Risikobewertung RIS-ges des betrachteten Produktionsablaufs angezeigt.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Verfahren zur Produktionsplanung, bei dem
eine Gesamtbewertungsgröße (RIS-ges) für einen Produktionsablauf ermittelt wird,
wobei der Produktionsablauf eine Mehrzahl von Produktionsschritten umfasst,
die Gesamtbewertungsgröße (RIS-ges) ermittelt wird aus Einzelbewertungsgrößen (RIS-single) für jeden Produktionsschritt des Produktionsablaufs,
wobei jeder Einzelbewertungsgröße (RIS-single) einer oder mehrere Werte zugeordnet werden, und hierbei zumindest einem Teil der Einzelbewertungsgrößen (RIS- single) ein Wertebereich zugeordnet wird, innerhalb welchem die jeweilige Einzelbewertungsgröße (RIS-single) liegt.

2. Verfahren nach Anspruch 1, bei dem
zumindest einem Teil der Einzelbewertungsgrößen (RIS-single) einzelne Werte zugeordnet werden, welche basieren auf:
- Messungen bezüglich des jeweiligen Produktionsschritts, und/oder
- Erfahrungswissen bezüglich des jeweiligen Produktionsschrittes.

3. Verfahren nach Anspruch 1 oder 2, bei dem zumindest einem Teil der Einzelbewertungsgrößen (RIS-single) einzelne Werte zugeordnet werden, welche auf einer Simulationen des jeweiligen Produktionsschrittes basieren, bei welcher berücksichtigt wird:
- das physikalische Verhalten einer den Prozessschritt durchführenden Maschine, und/oder
- Alterung einer den Prozessschritt durchführenden Maschine, und/oder
- Wartungen und/oder Reparaturen an einer den Prozessschritt durchführenden Maschine, und/oder
- Ausfälle an einer den Prozessschritt durchführenden Maschine.

4. Verfahren nach einem der Ansprüche 1 bis 3, bei dem zusätzlich zu den Wertebereichen den Einzelbewertungsgrößen (RIS-single) Wahrscheinlichkeitsverteilungen zugeordnet werden bezüglich der Verteilung der Einzelbewertungsgrößen (RIS-single) innerhalb der Wertebereiche.

5. Verfahren nach einem der Ansprüche 1 bis 4, bei dem das Ergebnis der Ermittlung eine Mehrzahl von Gesamtbewertungsgrößen (RIS-ges) beinhaltet.

6. Verfahren nach einem der Ansprüche 1 bis 5, bei dem sich die Gesamtbewertungsgröße (RIS-ges) aus der Summe der Einzelbewertungsgrößen (RIS-single) der Produktionsschritte des Produktionsablaufs zusammensetzt.

7. Verfahren nach einem der Ansprüche 1 bis 6, bei dem unter Verwendung der ermittelten Gesamtbewertungsgröße (RIS-ges) eine Produktionsplanung erfolgt und zumindest ein Produkt gemäß der Produktionsplanung gefertigt wird.

8. Vorrichtung oder System zur Datenverarbeitung, umfassend Mittel zur Ausführung des Verfahrens nach einem der Ansprüche 1 bis 7.

9. Computerprogramm, umfassend Befehle, die bei der Ausführung des Programms durch einen Computer diesen veranlassen, die Schritte des Verfahrens nach einem der Ansprüche 1 bis 7 auszuführen.

10. Computerlesbarer Datenträger, auf dem das Computerprogramm nach Anspruch 9 gespeichert ist.

11. Datenträgersignal, das das Computerprogramm nach Anspruch 9 überträgt.
